# EUROPÄISCHE PATENTSCHRIFT

(11) **EP 3 230 829 B1**
(45) Veröffentlichungstag und Bekanntmachung des Hinweises auf die Patenterteilung: **23.10.2019**
(21) Anmeldenummer: 15808536.5
(22) Anmeldetag: 01.12.2015
(51) Int. Cl.: G06F 3/01, G06F 3/0354

(54) **EINGABEELEMENT FÜR ELEKTRONISCHE APPARATE**
INPUT ELEMENT FOR ELECTRONIC DEVICES
ÉLÉMENT D'ENTRÉE POUR APPAREILS ÉLECTRONIQUES

(30) Priorität: 12.12.2014 AT 9012014
(43) Veröffentlichungstag der Anmeldung: 18.10.2017
(73) Patentinhaber: Next System Vertriebsges.m.b.H., 1210 Wien (AT)
(72) Erfinder: KELTSCHA, Gregor, A-3040 Neulengbach (AT); NUSSBAUMER, Michael, A-4690 Pitzenberg (AT); PLACHY, Thomas, A-4813 Altmünster (AT)
(74) Vertreter: Keschmann, Marc
(86) Internationale Anmeldenummer: PCT/AT2015/000153
(87) Internationale Veröffentlichungsnummer: WO 2016/090392

(56) Entgegenhaltungen:
- WO-A1-2010/080917
- WO-A1-2011/161489
- US-A1- 2011 227 872

## Beschreibung

Die Erfindung betrifft ein Eingabeelement für elektronische Apparate mit einem insbesondere translatorisch bewegbaren, eine Berührungsfläche aufweisenden haptischen Feedback-Element, das mit einem Aktuator zusammenwirkt und durch diesen gegen die Kraft eines Rückstellelements auslenkbar ist, wobei der Aktuator als elektrostatischer Parallelplatten-Aktuator ausgebildet ist, dessen Elektrodenplatten in einem variablen Normalabstand zueinander gehalten sind.

US 2011/227872 A1 beschreibt ein Eingabeelement für elektronische Apparate mit einem insbesondere translatorisch bewegbaren, eine Berührungsfläche aufweisenden haptischen Feedback-Element, das mit einem Aktuator zusammenwirkt und durch diesen gegen die Kraft eines Rückstellelements auslenkbar ist, wobei der Aktuator als elektrostatischer Parallelplatten-Aktuator ausgebildet ist, dessen Elektrodenplatten in einem variablen Normalabstand zueinander gehalten sind, wobei wenigstens eine Elektrodenplatte quer zur Plattenebene luftdurchlässig ist, und wobei die luftdurchlässige Elektrodenplatte eine Vielzahl von über die Plattenebene vorzugsweise gleichmäßig verteilten Löchern aufweist.

WO 2011/161489 A1 beschreibt einen Touchscreen mit gitterförmiger Elektrode.

In der WO 2010/080917 A1 wird ein Eingabeelement beispielsweise als berührungsempfindliche elektronische Anzeigeeinrichtung (Touchscreen) ausgebildet. Ein Touchscreen ist ein kombiniertes Ein- und Ausgabegerät, bei dem durch Berührung von Teilen eines Bildes der Programmablauf eines technischen Gerätes, meist eines Computers, direkt gesteuert werden kann. Das Eingabeelement kann auch ein Touchpad eines technischen Gerätes sein. Dadurch, dass die Berührungsfläche des Touchscreens oder Touchpads translatorisch bewegbar ist, wobei die translatorische Bewegung mittels eines Aktuators gesteuert wird, wird die Möglichkeit eines haptischen Feedbacks geschaffen. Die Ansteuerung des Aktuators kann dabei in Abhängigkeit von Benutzereingaben erfolgen, beispielsweise um eine Benutzereingabe zu bestätigen. Ein solches haptisches Feedback erleichtert die Bedienung eines technischen Geräts mittels Touchscreen oder Touchpad.

Der Aktuator zum Antrieb der translatorischen Bewegung der Berührungsfläche ist bei der in der WO 2010/080917 A1 beschriebenen Ausführung als elektrostatischer Parallelplatten-Aktuator ausgebildet. Ein elektrostatischer Parallelplatten-Aktuator umfasst zwei Elektrodenplatten, die in einem variablen Normalabstand zueinander gehalten sind. Die eine Elektrodenplatte ist relativ zu einem Gehäuse oder dgl. des elektronischen Geräts starr angeordnet. Die andere, mit der Berührungsfläche zusammenwirkende Elektrodenplatte ist gegen die Kraft eines Rückstellelements auslenkbar. Zwischen den beiden Elektrodenplatten ist ein Zwischenraum vorgesehen, in dem ein Dielektrikum angeordnet ist. Wenn nun eine Spannung an die Elektrodenplatten angelegt wird, entstehen elektrostatische Kräfte, welche im Sinne einer Abstoßung oder Anziehung der Elektrodenplatten wirken und eine entsprechende Auslenkung der beweglich gehaltenen Elektrodenplatte bewirken. Das Rückstellelement sorgt für die Rückstellung der beweglich gehaltenen Elektrodenplatte in ihre Ausgangsposition.

Haptische Feedback-Profile können eine Abfolge von Auslenkungs- und Rückstellungsbewegungen der beweglichen Elektrodenplatte in verschiedenen Signalformen, definiert durch Flanke, Impulsdauer und Amplitude umfassen. Hierfür ist es günstig, wenn die Auslenkungs- und Rückstellungscharakteristik des Aktuators über einen möglichst weiten Auslenkungsamplitudenbereich beherrschbar ist. In diesem Zusammenhang besteht jedoch das Problem, dass beim Aufeinanderzubewegen der zwei Elektrodenplatten in größerem Umfang eine Luftverdrängung aus der dazwischenliegenden Kammer erfolgt. Dies führt einerseits zu einer je nach Anwendungsfall erwünschten Dämpfung der Platten beim Aufeinanderzubewegen, gleichzeitig aber auch dazu, dass die Elektrodenplatten beim nachfolgenden Auseinanderbewegen auf Grund der zunächst langsam in den Zwischenraum wieder einströmenden Luft gebremst werden, was im Hinblick auf den gewünschten haptischen Feedback-Effekt nachteilig ist. Ein weiterer Nachteil besteht in der durch die Luftverdrängung verursachten Geräuschentwicklung.

Die Erfindung zielt daher drauf ab, ein Eingabeelement im Hinblick auf die oben dargestellten Probleme zu verbessern.

Die Erfindung ist in den Ansprüchen definiert.

Das Eingabeelement ist derart gebildet, dass wenigstens eine Elektrodenplatte quer zur Plattenebene luftdurchlässig ist. Dadurch, dass wenigstens eine Elektrodenplatte luftdurchlässig ist, kann die Luft unmittelbar quer zur Plattenebene durch die Platten aus der zwischen den Elektrodenplatten vorgesehenen Kammer entweichen und während der Rückstellung der verlagerbaren Elektrodenplatte über den selben Weg wieder zurückströmen. Dadurch gelingt eine wesentliche Reduzierung des Strömungswiderstands, sodass eine negative Beeinflussung des Feedback-Profils vermieden werden kann. Insbesondere kann ein wesentlich größerer Strömungsquerschnitt bereitgestellt werden.

Weiters wird durch die Vermeidung des Komprimierens eines Luftpolsters und durch die Bereitstellung eines großen Strömungsquerschnitts durch die Platte hindurch eine Geräuschminimierung erreicht.

Die luftdurchlässige Elektrodenplatte ist von einem elektrisch leitfähigen Gitter oder Gewebe gebildet. Dabei ist vorgesehen, dass die luftdurchlässige Elektrodenplatte, insbesondere das Gitter oder Gewebe, eine Vielzahl von einander kreuzenden Drähten umfasst. Dies stellt einen überaus großen Strömungsquerschnitt durch die Platte hindurch dar. Weiters wurde beobachtet, dass eine Ausbildung als Gitter oder Gewebe im elektrischen Feld wie eine homogene Fläche wirkt, sodass im Vergleich zu einer Ausbildung als homogene Platte ohne Löcher im Wesentlichen keine Kraft zur Auslenkung der auslenkbaren Elektroden verloren geht. Das Gitter oder Gewebe besteht bevorzugt aus einem Metall, insbesondere aus Stahl.

Insbesondere wenn, wie dies einer bevorzugten Weiterbildung entspricht, die Ausbildung von Kanten vermieden wird und die Drähte daher einen runden Querschnitt aufweisen, wird ein homogenes elektrisches Feld über die gesamte Fläche der Elektrodenplatte erzeugt. Es hat sich gezeigt, dass Kanten insbesondere bei einer Hochfrequenzspannungsbeaufschlagung der Elektrodenplatten die Eigenschaften des elektrischen Feldes ungünstig beeinflussen.

Das Gitter oder Gewebe besteht bevorzugt aus einem Draht mit einer Drahtstärke von 20-60µm, insbesondere 30-40µm. Die Maschenweite beträgt bevorzugt 40-150pm, insbesondere 50-80µm, insbesondere 60-70µm. Bevorzugt ist in diesem Zusammenhang ein Mesh-Wert (pro cm) von 50-150, insbesondere 80-120.

Eine Maximierung des Luft-Strömungsquerschnitts gelingt unter Beibehaltung der elektrostatischen Eigenschaften und der Stabilität der Elektrode durch Wahl eines Gitters oder Gewebes, das eine freie Fläche von 40-50% der Gesamtfläche aufweist.

Eine bevorzugte Ausbildung der Erfindung sieht vor, dass eine Elektrodenplatte mit einer Hochspannungsquelle verbunden ist und die andere Elektrodenplatte auf Massepotential liegt, wobei die auf Massepotential liegende Elektrodenplatte luftdurchlässig ausgebildet ist. Alternativ kann auch die mit der Hochspannungsquelle verbundene Elektrodenplatte auf erfindungsgemäße Art und Weise luftdurchlässig ausgebildet sein, allerdings verliert man in diesem Fall durch die Notwendigkeit zur Einhaltung von Sicherheitsabständen bzw. Kriechstrecken zwischen der Hochspannungselektrode und den Löchern ungleich mehr Fläche als wenn die Luftdurchlässigkeit in der unisolierten, auf Massepotential liegenden Elektrodenplatte vorgesehen ist.

Um ein geeignetes Tragelement für die Elektrodenplatte zur Verfügung zu stellen ohne dass der für die Luft vorgesehene Strömungsquerschnitt hierdurch beeinträchtigt wird, kann gemäß einer vorteilhaften Weiterbildung so vorgegangen werden, dass die luftdurchlässige Elektrodenplatte auf einem Rahmen aufgespannt ist.

Bei einem elektrostatischen Parallelplattenaktuator ist die eine Elektrodenplatte starr angeordnet und die andere Elektrodenplatte ist mit dem Feedback-Element verbunden oder sie bildet einen Teil desselben aus und ist relativ zur starren Elektrodenplatte auslenkbar gehalten. Grundsätzlich kann hierbei entweder die starre oder die auslenkbare Elektrodenplatte luftdurchlässig ausgebildet sein. Es ist auch denkbar, dass beide Elektrodenplatten luftdurchlässig sind. Bevorzugt ist es aber, wenn die starre Elektrodenplatte luftdurchlässig ausgebildet ist. Da die starre Platte in der auf der dem Touchscreen bzw. der Berührungsfläche des Feedback-Elements abgewandten Seite des Aktuators angeordnet ist, ermöglicht es eine solche Konstruktion, die Luft auf der Rückseite austreten zu lassen. An der Vorderseite kann das Eingabeelement dann eine Isolierung aufweisen, wie z.B. eine den Spalt zwischen dem Feedback-Element und dem dieses rahmenförmig umgebende Gehäuse überbrückende flexible Folie.

Eine bevorzugte Ausbildung sieht in diesem Zusammenhang vor, dass die starre Elektrodenplatte auf einem mit Lüftungslöchern versehenen Gehäuseelement befestigt ist. Dabei kann der Rahmen, auf den das Gitter oder Gewebe aufgespannt ist, selbst das Gehäuseelement ausbilden.

Anzeigeeinrichtungen eines Touch-Screens weisen in der Regel einen Schichtaufbau aus verschiedenen Schichten auf, wobei die anzeigende Schicht, wie z.B. ein LCD-Element, von einer Glasplatte abgedeckt ist und weiters eine als Berührungssensor wirkende Schicht vorgesehen ist. Der Berührungssensor kann beispielsweise eine kapazitiv oder resistiv arbeitende Beschichtung des Anzeigeelements umfassen.

Eine Erhöhung des Hubs des Feedback-Elements gelingt gemäß einer bevorzugten Weiterbildung dadurch, dass der elektrostatische Parallelplatten-Aktuator wenigstens drei übereinander angeordnete Elektrodenplatten aufweist, die jeweils relativ zur unmittelbar darunter liegenden Elektrodenplatte gegen die Kraft eines Rückstellelements auslenkbar gehalten sind, und dass eine Parallelführung für die mit der Berührungsfläche zusammenwirkende Elektrodenplatte vorgesehen ist. Diese Ausbildung sieht somit wenigstens zwei übereinander angeordnete Parallelplatten-Aktuatoren vor, wobei die erste Platte beispielsweise relativ zu einem Gehäuse starr angeordnet ist, die zweite, darüber liegende Platte relativ zu der ersten Platte auslenkbar gehalten ist und die dritte, über der zweiten Platte angeordnete und mit der Berührungsfläche zusammenwirkende Platte wiederum relativ zur zweiten Platte auslenkbar ist. Bei einer solchen Ausführung kann sowohl die erste Platte als auch die zweite Platte luftdurchlässig ausgebildet sein.

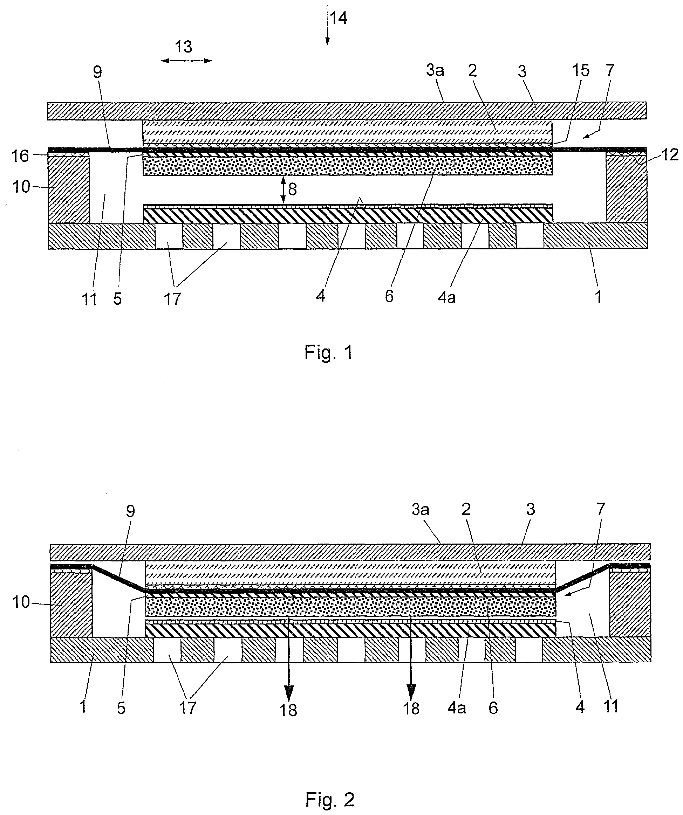

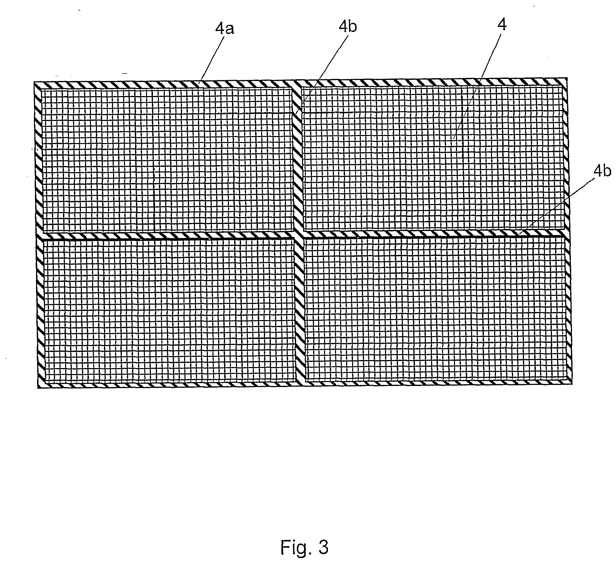

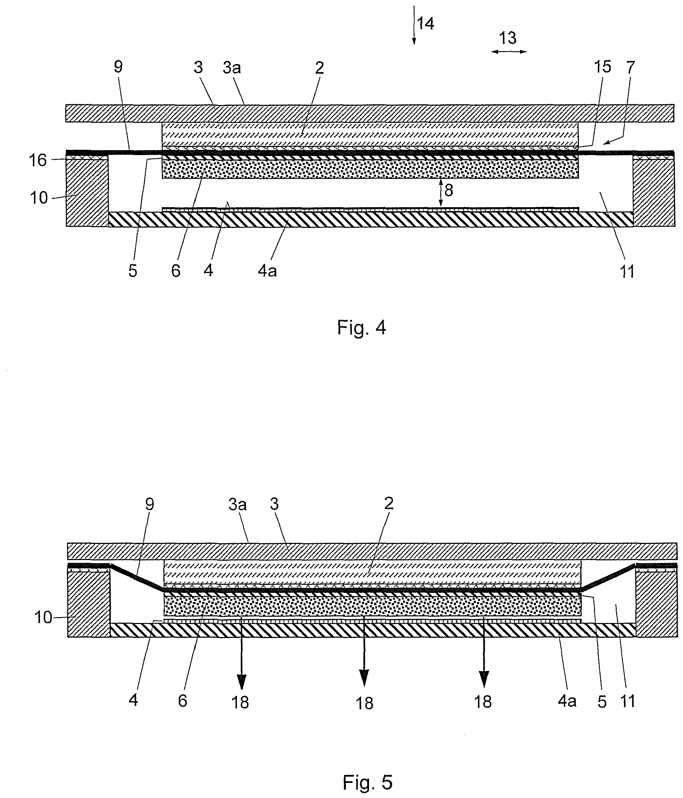

Die Erfindung wird nachfolgend anhand von in der Zeichnung schematisch dargestellten Ausführungsbeispielen näher erläutert. In dieser zeigen Fig. 1 eine Schnittansicht des erfindungsgemäßen Eingabeelements in einer ersten Ausführung mit der Berührungsfläche in der Ausgangsposition, Fig. 2 die Ausbildung gemäß Fig. 1 mit der Berührungsfläche in einer nach unten verlagerten Position, Fig. 3 eine Draufsicht auf eine luftdurchlässige Elektrodenplatte, Fig. 4 eine abgewandelte Ausführung des Eingabeelements mit der Berührungsfläche in der Ausgangsposition und Fig. 5 die Ausbildung gemäß Fig. 4 mit der Berührungsfläche in einer nach unten verlagerten Position.

Das Eingabeelement gemäß Fig. 1 weist eine Gehäuseplatte 1 auf, die zu einem Gehäuse eines elektronischen Apparats gehört. Mit 2 ist ein Touchscreen bezeichnet, d.h. eine Kombination einer elektronischen Anzeigevorrichtung, wie beispielsweise eine LCD-Anzeige, mit einem Berührungssensor, sodass durch Berührung von Teilen des auf der Anzeigeeinrichtung angezeigten Bildes der Programmablauf des technischen Geräts gesteuert werden kann. Der Touchscreen 2 weist ein den Touchscreen 2 überdeckendes Coverglas 3 mit einer Berührungsfläche 3a auf, welche durch den Finger eines Benutzers berührt werden kann, um das elektronische Gerät zu steuern. Zwischen dem Touchscreen 2 und der Gehäuseplatte 1 ist ein elektrostatischer Parallelplatten-Aktuator angeordnet, der zwei Elektrodenplatten 4 und 5 aufweist. Die erste Elektrodenplatte 4 ist als Gitter aus einander kreuzenden elektrisch leitenden Drähten ausgebildet und ist auf einem Rahmen 4a aufgespannt, der mit der Gehäuseplatte 1 starr verbunden ist. Die zweite Elektrodenplatte 5 ist mit dem Touchscreen 2 zu gemeinsamer Bewegung verbunden und bildet mit diesem das haptische Feedback-Element 7. Weiters trägt die zweite Elektrodenplatte 5 ein Dielektrikum 6. Zwischen dem Dielektrikum 6 und dem Gitter 4 verbleibt ein Luftspalt 8. Zwischen dem Touchscreen 2 und der zweiten Elektrodenplatte 5 ist eine elastische transparente Folie 9 angeordnet, insbesondere angeklebt (Klebeschicht 15), welche den Touchscreen 2 allseits überragt und dadurch den zwischen dem Gehäuseelement 10 und dem äußeren Rand des Touchscreens 2 angeordneten umlaufenden Spalt 11 überbrückt. Der äußere Rand der Folie 9 ist am Gehäuseelement 10 befestigt, insbesondere mit diesem verklebt (Klebeschicht 16), und zwar an der Fläche 12 des Gehäuseelements 10, die den Touchscreen 2 rahmenförmig umgibt.

In der in Fig. 1 dargestellten Ausgangsposition des Feedback-Elements 7 ist die Folie 9 im Wesentlichen eben gespannt, sodass die Folie 9 das Feedback-Element 7 in der Folienebene positioniert, sodass es in Richtung des Doppelpfeils 13 sowie quer zur Zeichenebene im Wesentlichen unbeweglich gehalten ist. Aufgrund der Anordnung der Folie 9 ist das Feedback-Element 7 jedoch relativ zum gehäusefesten Gitter 4 ausgehend von der in Fig. 1 dargestellten Ausgangsposition in Richtung des Pfeils 14 auslenkbar gehalten. Die Elektrodenplatten 4 und 5 sind so mit einer elektrischen Spannungsversorgung verbunden (nicht dargestellt), dass zwischen den beiden Elektrodenplatten 4,5 eine Spannungsdifferenz aufgebaut werden kann, wodurch elektrostatische Kräfte entstehen, welche zu einer gegenseitigen Anziehung der Elektrodenplatten 4,5 führen. Dabei ist es bevorzugt, dass die zweite Elektrodenplatte 5 mit einer Hochspannungsquelle verbunden ist und das Gitter 4 mit Massepotential.

Der ausgelenkte Zustand ist in Fig. 2 dargestellt und es ist ersichtlich, das die Folie 9 im den Spalt 11 überbrückenden Bereich gedehnt wurde. Dadurch ergibt sich eine Rückstellkraft.

Sobald die elektrische Spannung abfällt, wird die Elektrodenplatte 5 und mit ihr das gesamte Feedback-Element 7 aufgrund der rückstellenden Kraft der Folie 9 wieder in ihre Ausgangsposition verlagert.

Während der Auslenkungsbewegung im Sinne des Pfeils 14 wird die im Luftspalt 8 vorhandene Luft durch das Gitter 4 verdrängt, wobei die Gehäuseplatte 1 eine Mehrzahl von Entlüftungslöchern 17 aufweist, damit die Luft wie schematisch mit den Pfeilen 18 angedeutet austreten kann. Über denselben Weg wird die Luft bei der Rückstellbewegung von außen angesaugt und gelangt in den sich bildenden Spalt 8.

In Fig. 3 ist der Rahmen 4a samt dem darauf gespannten Gitter 4 dargestellt. Es ist ersichtlich, dass der Rahmen 4a einen rechteckigen Umriss aufweist und als zusätzliche Abstützung für das Gitter 4 kreuzweisende verlaufende Stege 4b aufweist.

Die Fig. 4 und 5 zeigen eine abgewandelte Ausbildung, wobei für gleiche Teile die gleichen Bezugszeichen verwendet werden wie in den Fig. 1 und 2. Die Ausbildung gemäß den Fig. 4 und 5 unterscheidet sich von der Ausbildung gemäß Fig. 1 und 2 lediglich darin, dass eine gesonderte Gehäuseplatte 1 entfallen kann, weil der Rahmen 4a des Gitters 4 das Eingabeelement statt der Gehäuseplatte unten abschließt.

## Patentansprüche

1. Eingabeelement für elektronische Apparate mit einem insbesondere translatorisch bewegbaren, eine Berührungsfläche (3a) aufweisenden haptischen Feedback-Element (7), das mit einem Aktuator zusammenwirkt und durch diesen gegen die Kraft eines Rückstellelements (9) auslenkbar ist, wobei der Aktuator als elektrostatischer Parallelplatten-Aktuator ausgebildet ist, dessen Elektrodenplatten (4,5) in einem variablen Normalabstand zueinander gehalten sind, wobei wenigstens eine Elektrodenplatte (4) quer zur Plattenebene luftdurchlässig ist, **dadurch gekennzeichnet, dass** die luftdurchlässige Elektrodenplatte (4) von einem elektrisch leitfähigen Gitter oder Gewebe gebildet ist, welches eine Vielzahl von einander kreuzenden Drähten umfasst.

2. Eingabeelement nach Anspruch 1, **dadurch gekennzeichnet, dass** die Drähte einen runden Querschnitt aufweisen.

3. Eingabeelement nach einem der Ansprüche 1 oder 2, **dadurch gekennzeichnet, dass** eine zweite Elektrodenplatte (5) mit einer Hochspannungsquelle verbunden ist und die luftdurchlässige Elektrodenplatte (4) auf Massepotential liegt.

4. Eingabeelement nach einem der Ansprüche 1 bis 3, **dadurch gekennzeichnet, dass** die luftdurchlässige Elektrodenplatte (4) auf einem Rahmen (4a) aufgespannt ist.

5. Eingabeelement nach einem der Ansprüche 1 bis 4, **dadurch gekennzeichnet, dass** die zweite Elektrodenplatte (5) mit dem haptischen Feedback-Element (7) verbunden ist oder einen Teil desselben ausbildet und relativ zur starren luftdurchlässigen Elektrodenplatte (4) auslenkbar gehalten ist.

6. Eingabeelement nach Anspruch 5, **dadurch gekennzeichnet, dass** die starre luftdurchlässige Elektrodenplatte (4) auf einem mit Lüftungslöchern versehenen Gehäuseelement (10) befestigt ist.

7. Eingabeelement nach einem der Ansprüche 4 bis 6, **dadurch gekennzeichnet, dass** der Rahmen (4a) das Gehäuseelement (10) ausbildet.

## Claims

1. An input element for electronic devices, comprising an, in particular translationally, movable haptic feedback element (7) with a touch surface (3a), which cooperates with an actuator and, through the latter, is deflectable against the force of a restoring element (9), wherein the actuator is configured as an electrostatic parallel-plate actuator whose electrode plates (4,5) are held at a variable normal distance relative to each other, wherein at least one electrode plate (4) is air-permeable transversely to the plane of the plates, **characterized in that** the air-permeable electrode plate (4) is comprised of an electrically conductive grid or tissue comprising a plurality of mutually crossing wires.

2. An input element according to claim 1, **characterized in that** the wires have a round cross section.

3. An input element according to claim 1 or 2, **characterized in that** a second electrode plate (5) is connected to a high-voltage source and the air-permeable electrode plate (4) lies at mass potential.

4. An input element according to any one of claims 1 to 3, **characterized in that** the air-permeable electrode plate (4) is stretched on a frame (4a).

5. An input element according to any one of claims 1 to 4, **characterized in that** the second electrode plate (5) is connected to the haptic feedback element (7) or forms part of the same and is held to be deflectable relative to the rigid, air-permeable electrode plate (4).

6. An input element according to any claim 5, **characterized in that** the rigid, air-permeable electrode plate (4) is fastened to a housing element (10) provided with vent holes.

7. An input element according to any one of claims 4 to 6, **characterized in that** the frame (4a) forms the housing element (10) .

## Revendications

1. Elément d'entrée pour appareils électroniques avec un élément à rétroaction tactile (7) présentant une surface de contact (3a) et pouvant en particulier effectuer un mouvement de translation, qui coopère avec un actionneur et par le biais duquel il peut être dévié à rencontre de la force d'un élément de rappel (9), dans lequel l'actionneur est réalisé en tant qu'actionneur à plaques parallèles électrostatique, dont les plaques d'électrode (4, 5) sont maintenues à une distance perpendiculaire variable l'une par rapport à l'autre, dans lequel au moins une plaque d'électrode (4) est perméable à l'air transversalement au plan de plaque, **caractérisé en ce que** la plaque d'électrode perméable à l'air (4) est formée par une grille ou un tissu électriquement conducteur, qui comprend une pluralité de fils qui se croisent.

2. Elément d'entrée selon la revendication 1, **caractérisé en ce que** les fils présentent une section transversale ronde.

3. Elément d'entrée selon l'une des revendications 1 ou 2, **caractérisé en ce qu'**une seconde plaque d'électrode (5) est reliée à une source de haute tension et la plaque d'électrode perméable à l'air (4) repose sur un potentiel de masse.

4. Elément d'entée selon l'une des revendications 1 à 3, **caractérisé en ce que** la plaque d'électrode perméable à l'air (4) est serrée sur un cadre (4a).

5. Elément d'entrée selon l'une des revendications 1 à 4, **caractérisé en ce que** la seconde plaque d'électrode (5) est reliée à l'élément à rétroaction tactile (7) ou forme une partie de celui-ci et est maintenue déviable par rapport à la plaque d'électrode perméable à l'air et rigide (4).

6. Elément d'entrée selon la revendication 5, **caractérisé en ce que** la plaque d'électrode perméable à l'air et rigide (4) est fixée sur un élément de boîtier (10) doté d'orifices de ventilation.

7. Elément d'entrée selon l'une des revendications 4 à 6, **caractérisé en ce que** le cadre (4a) réalise l'élément de boîtier (10).
